# EUROPEAN PATENT APPLICATION

(11) **EP 4 772 842 A1**
(43) Date of publication of application: **08.07.2026**
(21) Application number: 26025001.4
(22) Date of filing: 02.01.2026
(51) Int. Cl.: G01D 9/00, G01D 11/24, G01D 21/00, G01K 1/022, G06K 19/07, G07C 3/00, G12B 9/02, H05K 5/00

(54) **DATA LOGGER FOR MONITORING A PRODUCTION AND SUPPLY CHAIN**

(30) Priority: 03.01.2025 IT 202500000015
(71) Applicant: HSC Holding S.r.l., 26900 Lodi (IT)
(72) Inventor: De Toro, Luca, 26900 Lodi (IT)
(74) Representative: Rapisardi, Mariacristina

(57) **Abstract**

Data logger (1) for monitoring a production and supply chain, including an outer casing (10) defining a housing space (20) for an electronic board (30) on which at least temperature and humidity sensor means (31) are mounted, wherein the outer casing (10) has a detachable structure made of paper material.

## Description

The present invention relates to a data logger for monitoring a production and supply chain.

In recent times, production, supply, and distribution chains for products have increasingly developed on a global scale, relying more and more on outsourcing strategies that integrate a multitude of services, and on collaboration among multiple functional entities that jointly implement the required and planned operations throughout the various stages of the supply chain. In the development of the physical paths of materials and products, particularly and typically perishable goods such as those in the pharmaceutical, cosmetic, and agri-food sectors, it is advisable, and often essential, to know and monitor the humidity and temperature conditions of the environment in which the products are transported and/or stored, such conditions being necessary to ensure their integrity and compliance with the required functional and quality characteristics and specifications.

For these purposes, data loggers for monitoring a supply chain have long been developed and available on the market, that are placed alongside the products and follow their route along specific segments or throughout the entire chain, providing the operator with information on the environmental conditions detected over time, in which the products are packaged and handled.

It is known that such data loggers are generally low-cost devices with a life cycle typically limited to that of the supply chain itself and are rarely reused once the cycle is completed, as the departure and arrival points are often geographically distant, making reuse economically unfeasible.

It is also known that the disposal of conventional data loggers in landfills poses serious environmental sustainability problems, since these devices contain power batteries and electronic circuits housed in casings that are difficult to disassemble and therefore to separate for proper and sustainable disposal.

There is therefore a need to simplify and improve the structure of known types of data loggers used for monitoring production and supply chains.

The technical task of the present invention is therefore to provide a data logger for monitoring a production and supply chain that eliminates the technical drawbacks found in the prior art. Within the scope of this technical task, an object of the invention is to provide a data logger for monitoring a production and supply chain featuring a simple and easily separable casing.

A further object of the present invention is to provide a data logger for monitoring a production and supply chain that is ecologically disposable.

The technical task, as well as these and other objects, are achieved according to the present invention by providing a data logger for monitoring a production and supply chain, including an outer casing defining a housing space for an electronic board on which at least temperature and humidity sensor means are mounted, characterized in that said outer casing has a detachable structure made of paper material.

In a preferred embodiment, the housing space has an internal shape matching the shape of the electronic board for the correct positioning of the electronic board inside it.

In a preferred embodiment, the casing comprises a plurality of modules, each of said modules having a through window, and the modules being stacked with the windows overlapping.

Other features of the present invention are further defined in the subsequent claims.

Further features and advantages of the invention will become more apparent from the description of a preferred but not exclusive embodiment of a data logger for monitoring a production and supply chain according to the present invention, provided by way of example and without limitation in the accompanying drawings, in which:

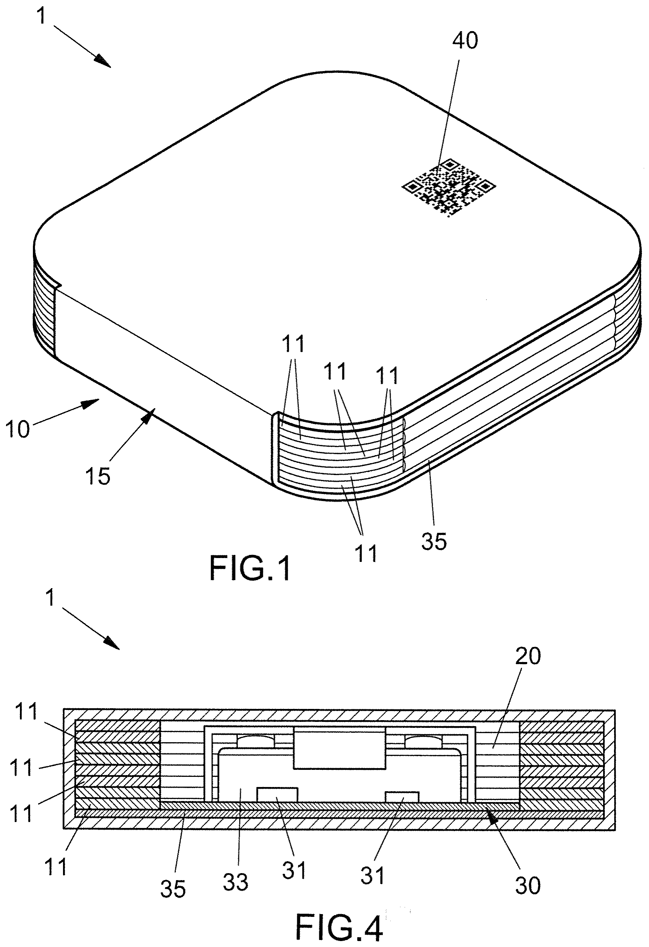

- Figure 1 shows an overall view of the data logger;

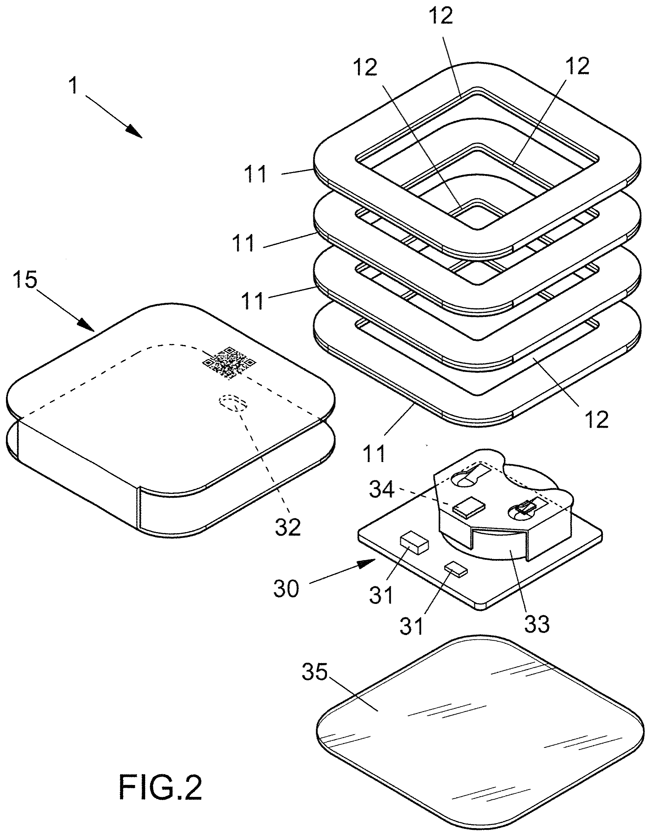

- Figure 2 shows a view of the data logger with its main components separated;

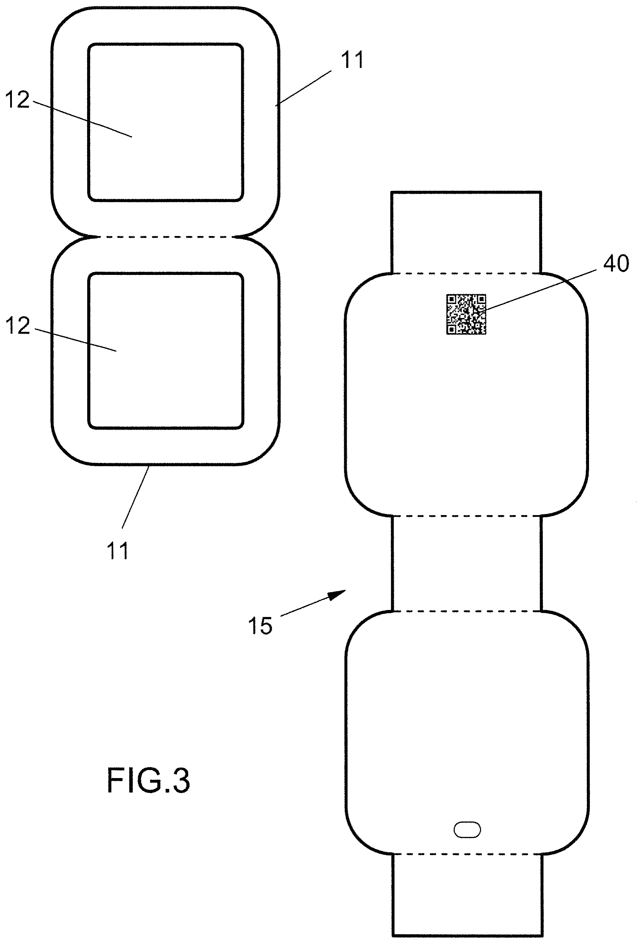

- Figure 3 shows the die-cut profiles of components of the casing;
- Figure 4 shows a vertical section of the data logger; and

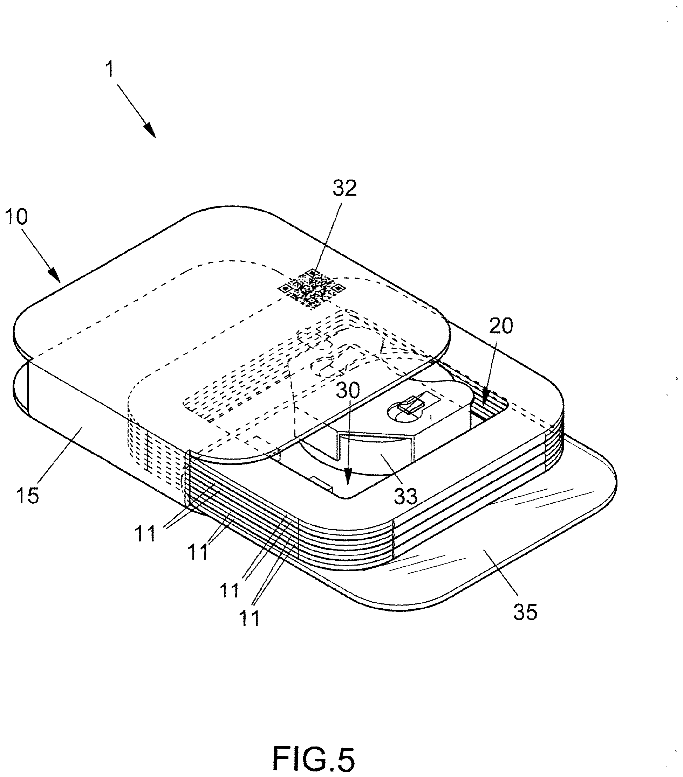

- Figure 5 shows the data logger partially opened.

The following detailed description refers to the accompanying drawings, which form part of the same.

In the drawings, like reference numerals typically identify like components, unless the context indicates otherwise.

The illustrative embodiments described in the detailed description and shown in the drawings are not intended to be limiting.

Other embodiments may be used, and further modifications may be made without departing from the spirit or scope of the subject matter disclosed herein.

The aspects of the present description, as generally described herein and illustrated in the figures, may be arranged, substituted, combined, and designed in a wide variety of different configurations, all of which are expressly contemplated and form part of this description.

With reference to the above-mentioned figures, a data logger for monitoring a production and supply chain, generally indicated with reference numeral 1, is shown.

The data logger 1 includes an outer casing 10 and an electronic board 30, in particular a PCB (printed circuit board), on which at least temperature and humidity sensor means 31 are mounted. On the electronic board 30 there are also mounted at least one power battery 33 and data transmission/reception means 34.

The data transmission/reception means 34 may comprise, for example, a short-range wireless connection, in particular a Bluetooth connection.

The electronic board 30 is housed in a housing space 20 defined by the outer casing 10; appropriately, the housing space 20 has an internal shape matching the external shape of the electronic board 30 for the correct positioning of the electronic board.

Innovatively and advantageously, the outer casing 10 has a detachable structure made of paper material, typically cardboard.

The casing 10 includes a block that defines the housing space 20 and a retaining band 15 wrapped around the block.

In the illustrated solution, the block is formed by a plurality of modules 11, each module 11 having a suitably shaped through window 12; the modules 11 are stacked with the through windows 12 overlapping, thereby defining the housing space 20.

Typically, the modules 11 are made of die-cut cardboard, generally arranged in pairs suitably folded onto each other, and are stacked in such a number that the sum of the thicknesses of the individual modules 11 corresponds to the height of the electronic board 30 equipped with the temperature and humidity sensor means 31.

The modules 11 may be joined together by a thin layer of adhesive.

The retaining band 15 wraps around the stack of modules 11.

In a non-illustrated embodiment, the block is formed from a single piece of corrugated cardboard, which allows better resistance to moisture penetration.

Obviously, this cardboard piece, having a configuration analogous to the stack of modules 11, will also have an opening defining the housing space 20.

Advantageously, the retaining band 15 is also made of paper material.

The retaining band 15 is wrapped around the block in such a way that it can be simply removed using the fingers of one hand.

The data logger further comprises at least one LED light emitter (not shown) mounted on the electronic board 30.

The LED serves to indicate the operating status of the data logger.

The LED is mounted on the side of the electronic board 30 opposite to the side on which the battery 33 is mounted.

At the corresponding position of the LED, the retaining band 15 has a hole 32 for allowing the passage of light.

For protecting the LED, a sheet of transparent material 35 is provided, interposed between the side of the electronic board 30 opposite to the one on which the battery 33 is mounted and the retaining band 15.

The transparent sheet 35 has an outer shape matching that of the modules 11.

Appropriately and advantageously, the retaining band 15 of the casing 10 has, on one of its faces, an optically scannable QR-type code 40 that can be read by an external electronic device, for example a smarphone or a tablet not shown in the figures, for accessing a management program. This program is suitably configured and set up for activating the data logger and for reading the temperature and humidity data detected by the sensor means 31.

More precisely, this program is also suitably configured and set up for selecting acceptable ranges of the detected temperature and humidity data values, for acquiring the monitored values and alarm signals, and for storing and archiving the historical sequences of the data values along at least one path in a production and supply chain on dedicated platforms.

Typically, the monitored temperature data values cover the range from -30 °C to 60 °C, and the humidity values the range from 0% to 100%.

For assembling the data logger, the following procedure is carried out.

The modules 11 are obtained by die-cutting a paper-based support, typically cardboard; the modules 11, either individually or die-cut in pairs, are detached from the support, folded onto themselves when in pairs, and stacked in a number sufficient for the sum of the thicknesses of the modules 11 to be at least equal to the height of the electronic board 30 equipped with the sensor means 31 and the battery 33.

The electronic board 30 is then inserted into the housing space 20 defined within the stacked modules 11, the housing space having an internal shape matching the external shape of the electronic board 30 for its correct positioning.

The retaining band 15 is also produced by die-cutting a paper-based support into a single piece, which is subsequently folded and closed onto itself.

The assembly formed by the plurality of modules 11 and the electronic board 30 is then inserted in a simple manner and, alternatively, removable using the fingers of one hand, into the retaining band 15 that wraps around it.

The data logger 1 for monitoring a production and supply chain is then coupled to the materials at the beginning of the path whose conditions are intended to be monitored.

At the end of the relevant path of the production and supply chain, the data logger 1 can be separated from the monitored materials and typically disposed of.

Advantageously and simply, the modules 11 and the retaining band 15 are separated from the electronic board 30 and, being made of paper material, can be easily disposed of and/or recycled in an ecological and sustainable manner.

Separately, the electronic board 30 may be economically refurbished and reused, or alternatively disposed of in accordance with specific procedures.

The transparent sheet 35 may also be made of an eco-compatible material, for example biodegradable and/or recyclable plastic.

In a basic version, the data logger stores the data detected by the temperature and humidity sensors and the detection timestamps. The stored data are then downloaded at the destination through the management program, which communicates with the data logger via its data transmission/reception means.

In a more advanced version, the data logger includes a geolocator and a SIM card, and the transmission/reception means include an antenna for real-time transmission of the detected data.

In an even more advanced version, the data logger also includes an impact sensor for detecting and signalling whether the associated product has been subjected to an impact, and/or a light sensor for detecting and signalling whether the product packaging has been opened, and/or an altitude sensor for deactivating the transmission/reception means during possible air transport of the product.

It has been found in practice that a data logger for monitoring a production and supply chain according to the invention is particularly advantageous owing to its casing with a simple, economical, and easily detachable structure.

A further advantage of the present invention is that it provides a data logger for monitoring a production and supply chain having a casing with an environmentally disposable structure.

A data logger for monitoring a production and supply chain conceived in this manner is susceptible to numerous modifications and variations, all falling within the scope of the inventive concept as defined in the claims; moreover, all details may be replaced with technically equivalent elements.

## Claims

1. A data logger (1) for monitoring a production and supply chain, including an outer casing (10) defining a housing space (20) for an electronic board (30) on which at least temperature and humidity sensor means (31) are mounted, **characterized in that** said outer casing (10) has a detachable structure made of paper material.

2. A data logger (1) according to claim 1, **characterized in that** said paper material is cardboard.

3. A data logger (1) according to any of the preceding claims, **characterized in that** it further includes data transmission/reception means (34).

4. A data logger (1) according to any of the preceding claims, **characterized in that** said housing space (20) has an internal shape matching the external shape of said electronic board (30) for correct positioning of said electronic board (30) inside said housing space (20).

5. A data logger (1) according to any of the preceding claims, **characterized in that** said casing (10) includes a block that defines said housing space (20) and a retaining band (15) wrapped around said block.

6. A data logger (1) according to the preceding claim, **characterized in that** said block is made up of a plurality of modules (11), each of said modules (11) having a through window (12), where said modules (11) are stacked with said windows (12) overlapping, and where said overlapping windows define said housing space (20).

7. A data logger according to claim 5, **characterized in that** said block is made from a single piece of corrugated material.

8. A data logger (1) according to any of claims 5 to 7, **characterized in that** said retaining band (15) is wrapped around said block in a way that it can be removed with the fingers of one hand.

9. A data logger (1) according to any of claims 3 to 8, **characterized in that** it has, on one side of said casing (10), an optically scannable code (40) that can be read by an electronic device for accessing a program to select a temperature and/or humidity monitoring range value.

10. A data logger (1) according to the preceding claim, **characterized in that** said program is configured and set up for the acquisition of said monitored values, for alarm signals if said values of said data fall outside the selected ranges, for the storage and archiving of historical sequences of said values of said data on dedicated platforms along at least one path in a said production and supply chain.
